(19) Europäisches Patentamt
European Patent Office
Office européen des brevets

(11) **EP 4 282 725 B1**

(12) **EUROPEAN PATENT SPECIFICATION**

(45) Date of publication and mention
of the grant of the patent:
**26.06.2024  Bulletin 2024/26**

(21) Application number: **22175818.8**

(22) Date of filing: **27.05.2022**

(51) International Patent Classification (IPC):
***B60W 40/10*** *(2012.01)*       ***B60W 50/00*** *(2006.01)*

(52) Cooperative Patent Classification (CPC):
**B60W 40/1005; B60W 50/0097;** B60W 30/143;
B60W 2300/14; B60W 2520/10; B60W 2530/201;
B60W 2530/205; B60W 2555/20

(54) **PREDICTION OF VEHICLE COMBINATION DRAG AREA INCLUDING CROSSWIND SENSITIVITY**

VORHERSAGE DER WIDERSTANDSFLÄCHE VON FAHRZEUGKOMBINATIONEN
EINSCHLIESSLICH SEITENWINDEMPFINDLICHKEIT

PRÉDICTION DE LA ZONE DE TRAÎNÉE COMBINÉE DU VÉHICULE, Y COMPRIS LA SENSIBILITÉ
AU VENT DE TRAVERS DE ZONE DE COMBINAISON DE VÉHICULE COMPRENANT UNE
SENSIBILITÉ AUX VENTS LATÉRAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.11.2023  Bulletin 2023/48**

(73) Proprietor: **VOLVO TRUCK CORPORATION
405 08 Göteborg (SE)**

(72) Inventors:
• **ASKERDAL, Mikael
439 51 ÅSA (SE)**

• **FREDRIKSSON, Jonas
431 49 MÖLNDAL (SE)**

(74) Representative: **Kransell & Wennborg KB
P.O. Box 2096
403 12 Göteborg (SE)**

(56) References cited:
**EP-A- 1 561 929       WO-A1-03/031253
JP-A- 2014 113 905**

## Description

### Technical field

The present invention relates to the field of estimation/prediction of drag area of a vehicle/vehicle combination in crosswind conditions. In particular, the present invention relates to how such a drag area can be predicted and used for prediction of energy consumption along a route demanding one or more changes of an exterior shape of the vehicle/vehicle combination.

### Background

In order to e.g. predict a fuel/energy consumption of a heavy vehicle combination when driving along a particular route, a model must first be established describing how air drag affects the vehicle combination. More or less accurate air drag models can be found through wind tunnel tests and/or numerical simulations (such as e.g. those based on computational fluid dynamics, CFD), and also for different wind conditions such as different wind speeds and/or wind attack angles.

Wind tunnel tests often include estimating the drag area $[C_dA](\theta)$ of a vehicle combination as a function of air-attack angle $\theta$, where $C_d$ is the drag coefficient and A the projected area. However, such models are only relevant as long as the exterior shape of the vehicle combination is not changed. As soon as the exterior shape of the vehicle changes, new wind tunnel tests and/or new numerical simulations are often required in order for the models to still remain as valid as before. The document WO 2003/031253 A1 discloses to use wind tunnel tests in order to evaluate a performance of air resistance reducing devices. As such wind tunnel tests and/or numerical simulations are often both tedious and costly, and in some situations not even feasible, the only remaining solution may be to perform so-called online estimation of the air drag model which includes measuring one or more relevant parameters while the vehicle combination is driving, after having performed the change of the exterior shape. To also estimate how the drag area depends on air-attack angle, on-line estimation techniques require access to accurate wind information while driving the vehicle combination, in order to properly capture the crosswind sensitivity of the drag area.

A problem with the above is that a configuration of a vehicle combination will often change during a particular transport mission, i.e. by adding or removing one or more trailers or other towed vehicle units at some points along the planned route. A driver may for example be assigned the task of picking up a first trailer at point A, deliver the first trailer to point B, and then return back with another, second trailer from point B. In order to accurately and in advance predict an amount of energy needed to complete the full mission, an estimate of the crosswind sensitive drag area for a particular vehicle combination configuration is needed prior to performing any changes leading to such a particular configuration. This makes on-line estimation less usable, as on-line estimation is only applicable after the change in configuration has already been made.

There is therefore a need for an improved way of drag area prediction in situations when the exact configuration (e.g. the exterior shape) of the vehicle combination is planned to change.

### Summary

To at least partially satisfy the above-identified need, there is provided an improved (computer-implemented) method of predicting a drag area of a vehicle combination after hypothetically changing an exterior shape of the vehicle combination from a first exterior shape to a second exterior shape, and a corresponding improved device, vehicle or vehicle combination, computer program and computer program product as defined by the accompanying independent claims. Various alternative embodiments of the improved method, device, vehicle or vehicle combination, computer program and computer program product are defined by the accompanying dependent claims.

The method includes obtaining a first drag area function (i.e. $[C_dA]^*(\theta)$) indicating how a drag area of the vehicle combination having the first exterior shape depends on air-attack angle ($\theta$). The method further includes obtaining a first projected area function ( $A_p^*(\theta)$ ) indicating how a projected area of the vehicle combination having the first exterior shape on a plane perpendicular to air-attack depends on air-attack angle ($\theta$). The method further includes obtaining a second projected area function ($A_p(\theta)$) indicating how a projected area of the vehicle combination having the second exterior shape on the plane perpendicular to air-attack depends on air-attack angle. The method also includes predicting a second drag area function ($[C_dA](\theta)$) indicating how a drag area of the vehicle combination having the second exterior shape depends on air-attack angle, based on a rescaling of the first drag area function by a ratio ( $A_p(\theta)/A_p^*(\theta)$ ) of the second projected area function to the first projected area function.

It should be noted that the method does not require that the change of the exterior shape of the vehicle combination is actually performed, but only requires an envisaged, hypothetical such change. This allows the method to predict, in advance of performing such a change, how the drag area of the vehicle will be affected by the change, which is useful when e.g. planning (in advance) an energy consumption for a vehicle combination when performing a mission involving one or more changes to the exterior shape (such as pick-up and/or drop-off of one or more trailers).

The envisaged method, improves upon currently available technology in that it allows to predict, in advance and prior to a change in the vehicle combination's exterior shape, the drag area of the vehicle combination after the change has been made. This is achieved while only requiring knowledge about the first drag area, the first projected area, and the second projected area (after the change), wherein obtaining the second projected area can e.g. be made using only geometrical attributes and does not require any advanced and/or expensive wind tunnel tests or numerical simulations to be performed. Thus, the predicted (second) drag area function after the change may be used to, in advance, estimate e.g. a fuel consumption of the vehicle combination also after a change of the exterior shape of the vehicle combination is made.

In some embodiments of the method, obtaining the second projected area function may include estimating the second projected area as a projected area of a cuboid on the plane perpendicular to an air-attack direction. Two opposite faces of this cuboid may e.g. correspond to the front and back of the vehicle combination, two other opposite faces of the cuboid may correspond to the sides side of the vehicle combination, and two other opposite faces of the cuboid may e.g. correspond to the top and bottom of the vehicle combination. Phrased differently, the cuboid may be used to approximate an overall outer shape of the vehicle combination. The projected area may for example be a parallelly projected area.

In some embodiments of the method, changing the exterior shape of the vehicle combination may include adding or removing at least one trailer to the vehicle combination. Estimating the second projected area may include modifying a side area of the cuboid (i.e. an area of the sides corresponding to the lateral sides of the vehicle combination which are not front or rear sides, i.e. the area of the left and right sides of the vehicle combination) by adding (in case of adding at least one trailer) or removing (in case of removing at least one trailers) thereto a side area of the at least one trailer. Of course, in case of e.g. adding one trailer while removing another trailer to/from the vehicle combination, the final side area of the cuboid may be adjusted accordingly. As generally used herein, a "side area" of a vehicle or vehicle combination is one of the lateral areas of the vehicle or vehicle combination which are not front, rear, top or bottom sides of the vehicle.

In some embodiments of the method, the method may include obtaining the first drag area function from at least one of wind tunnel experiments/tests and numerical simulations. For example, a towing unit and towed unit combination may e.g. be provided from factory, and the factory may have gone through the effort of performing wind tunnel tests/experiments and/or numerical simulations on such a particular combination.

In some embodiments, the method may further include assuming that changing to the second exterior shape from the first exterior shape corresponds to a scaling of the exterior shape of the vehicle. In some embodiments, it may be assumed that the change of exterior shape only corresponds to a scaling, and not e.g. to a shape of an overall form of the vehicle combination (as performed if e.g. adding or removing aerodynamic spoilers, adding/removing timber from a timber trailer, etc.).

In some embodiments of the method, the method may further include obtaining predicted wind information pertinent to a particular route. The method may further include predicting an energy consumption of the vehicle combination if driving along the particular route using the predicted second drag area function and the obtained predicted wind information. Wind information may e.g. include wind speed and/or direction at points along the route, in particular at time instances at which the vehicle combination is supposed to arrive at the points. As described earlier herein, this is advantageous as the envisaged method of predicting the (second) drag area can be made before changing the exterior shape, and e.g. the energy consumption of the vehicle combination may thus be estimated in advance (i.e. predicted), before the transport mission has even started. The prediction of the energy consumption may be based on an assumed speed of the vehicle at points along the route.

In some embodiments of the method, the method may further include controlling a speed of the vehicle combination based on the predicted energy consumption. For example, a cruise control of the vehicle combination may take the predicted energy consumption into account in an attempt to optimize the speed at the points along the route to both minimize fuel consumption and required travelling time to complete the route. It may for example be decided to drive faster in areas where wind and crosswind effects will be less, and to drive slower in areas where wind and crosswind effects are predicted to have a greater effect on the air drag and overall fuel consumption. Other examples may include e.g. using the knowledge about how the drag area changes with air-attack angle to maintain a constant speed when the wind conditions changes. By having this information, a cruise control system of the vehicle (combination) may e.g. better compensate for fluctuations in forces affecting the vehicle due to the wind.

According to a second aspect of the present invention, a device for predicting a drag area of a vehicle combination after hypothetically changing an exterior shape of the vehicle combination from a first exterior shape to a second exterior shape is provided. The device includes processing circuitry configured to cause the device to: obtain a first drag area function ($[C_dA]^*(\theta)$) indicating how a drag area of a vehicle combination having a first exterior shape or depends air-attack angle ($\Theta$); obtain a first projected area function ($A_p^*(\theta)$) indicating how a projected area of the vehicle combination having the first exterior shape on a plane perpendicular to air-attack depends on air-attack angle; obtain a second projected area function ($A_p(\theta)$) indicating how a projected area of the vehicle combination having the second exterior shape on the plane perpendicular to air-attack depends on air-attack angle, and, to predict a second drag area function ($[C_dA](\theta)$) indicating how a drag area of the vehicle combination having the second exterior shape depends on air-attack angle, based on a rescaling of the first drag area function by a ratio ($A_p(\theta)/A_p^*(\theta)$) of the second projected area function to the first projected area function. The device is thus configured to perform the method of the first aspect.

In some embodiments of the device, the processing circuitry may be further configured to cause the device to perform any embodiment of the method as described above or herein. For example, the processing circuitry may be further configured to cause the device to, in addition to the steps recited above, also e.g. obtain predicted wind information pertinent to a particular route, and predict an energy consumption of the vehicle combination if driving along the particular route using the predicted second drag area function and the obtained predicted wind information.

According to a third aspect of the present invention, a vehicle or vehicle combination is provided. The vehicle or vehicle combination includes a device according to the second aspect (or any embodiments thereof), configured to perform a method according to the first aspect (or any embodiments thereof).

In some embodiments of the vehicle or vehicle combination, the device may form part of a cruise control system configured to control a speed of the vehicle or vehicle combination. As mentioned above, the device may e.g. provide information about the predicted drag area and/or fuel consumption at certain vehicle speeds, such that the cruise control may optimize the ride to minimize fuel consumption while also minimizing travelling time, and similar.

According to a fourth aspect of the present invention, a computer program for predicting a drag area of a vehicle combination after hypothetically changing an exterior shape of the vehicle combination from a first exterior shape to a second exterior shape is provided. The computer program includes computer code that, when running on processing circuitry of a device (such as the device of the second aspect or embodiments thereof), causes the device to: obtain a first drag area function ($[C_dA]^*(\theta)$) indicating how a drag area of the vehicle combination having the first exterior shape depends on air-attack angle ($\Theta$); obtain a first projected area function ($A_p^*(\theta)$) indicating how a projected area of the vehicle combination having the first exterior shape on a plane perpendicular to air-attack depends on air-attack angle; estimate a second projected area function ($A_p(\theta)$) indicating how a projected area of the vehicle combination having the second exterior shape on the plane perpendicular to air-attack depends on air-attack angle, and predict a second drag area function ($[C_dA](\theta)$) indicating how a drag area of the vehicle combination having the second exterior shape depends on air-attack angle, based on a rescaling of the first drag area function by a ratio ($A_p(\theta)/A_p^*(\theta)$) of the second projected area function to the first projected area function. The computer program is thus such that it causes the device to perform a method according to the first aspect.

In some embodiments of the computer program, the computer code may be further such that it, when running on the processing circuitry of the device, causes the device to perform any embodiment of the method as envisaged herein.

According to a fifth aspect of the invention, a computer program product is provided. The computer program product includes a computer-readable storage medium on which the computer program is stored. In some embodiments of the computer program product, the storage medium may be non-transitory.

Other objects and advantages of the present invention will be apparent from the following detailed description, the drawings and the claims. Within the scope of the present invention, it is envisaged that all features and advantages described with reference to e.g. the method of the first aspect are relevant for, apply to, and may be used in combination with also any feature and advantage described with reference to the device of the second aspect, the vehicle (combination) of the third aspect, the computer program of the fourth aspect, and the computer program product of the fifth aspect, and vice versa.

## Brief description of the drawings

Exemplifying embodiments will now be described below with reference to the accompanying drawings, in which:

Figures 1A-1C schematically illustrate various embodiments of a method of predicting a new/second drag area of a vehicle combination according to the present invention;

Figures 2A and 2B schematically illustrate flows of various embodiments of a method of drag area prediction according to the present invention, and

Figures 3A and 3B schematically illustrate various embodiments of a device (for drag area prediction) according to the present invention.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the Figures, the (absolute or relative) sizes of elements and regions may be exaggerated or understated vis-à-vis their true values for illustrative purposes and, thus, are provided to illustrate the general structures of the embodiments.

**Detailed description**

In what follows, the terms "vehicle" and "vehicle combination" will be used interchangeably, if not explicitly stated to the contrary. The same applies to the terms "wind" and "air" which, if not stated to the contrary, will be used interchangeably as well.

When a vehicle combination moves/drives relative to the surrounding wind/air, a resulting air drag force $F_a$ affecting the vehicle combination may be approximated as

$$F_a \approx 0.5\rho[C_dA](\theta)v_{ax}^2, \qquad\qquad (1)$$

where $\rho$ is air density, $[C_dA](\theta)$ is the drag area (the combined drag coefficient and frontal area of the vehicle combination) as a function of air-attack angle $\theta$, and $v_{ax}$ is the axial/longitudinal air speed.

For many transport missions, the driver may be expected to pick-up and/or drop-off one or more vehicle units (such as e.g. trailers) along the way, and such changes to the exterior shape of the vehicle may thus affect the drag area of the vehicle combination. As the drag area influences the air drag force $F_a$, and as the air drag force $F_a$ influences how hard e.g. the propulsion system of the vehicle combination must work to overcome the resistance caused by such air drag, operations such as predicting a fuel/energy consumption of the vehicle combination when performing the planned mission is thus difficult, especially if the prediction is to be made before starting the mission. As discussed earlier herein, there are techniques available for using on-line estimation of the drag area, but as these techniques all estimate the current, present air drag while driving, they are less useful in a situation where knowledge about the drag area after the change in exterior shape is required before the change is actually made.

How the present invention solves the above problem will now be described in more detail with references to the drawings. The figures of these drawings show exemplifying embodiments of an envisaged improved method, device, and vehicle/vehicle combination, and also serve to illustrate the concepts of an improved computer program and computer program product as also envisaged herein. The drawings show currently preferred embodiments, but the invention may, however, be embodied in many different forms and should not be construed as limited to the embodiments set forth herein; rather, these embodiments are provided for thoroughness and completeness, and fully convey the scope of the present invention to the skilled person.

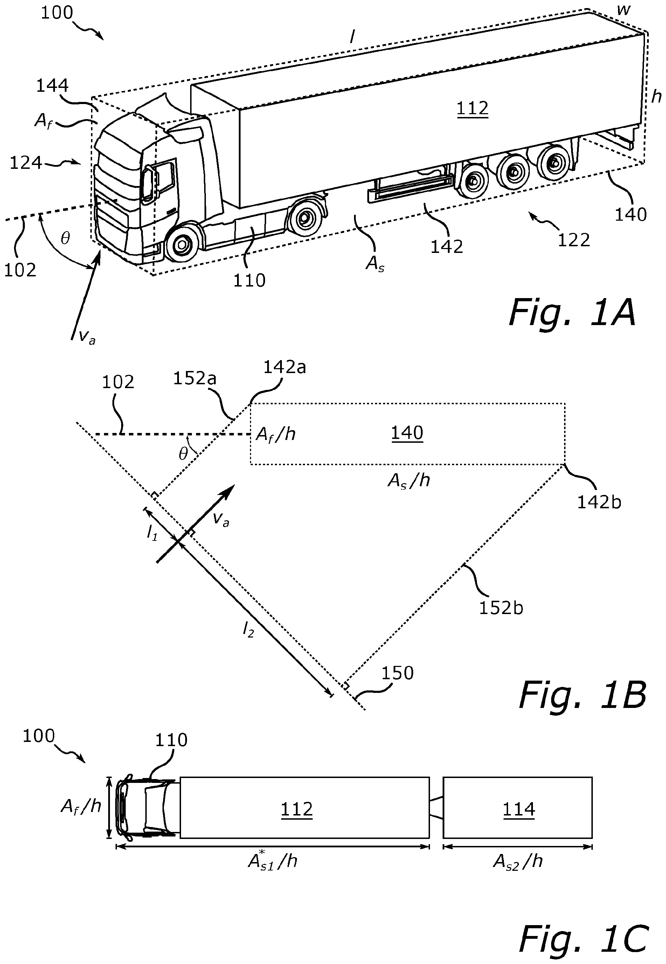

To illustrate the proposed method, reference is made to Figures 1A-1C. Figure 1A schematically illustrates a vehicle combination 100 driving in a situation where air attacks the vehicle at an angle $\theta$, where $\theta$ is measured as the angle between an air vector $v_a$ and a longitudinal direction/axis of the vehicle combination (as indicated by the dashed line 102). The air vector $v_a$ points in the direction of air attack at the current location of the vehicle combination 100, and has a magnitude proportional to air speed.

Before the change in exterior shape, the vehicle combination has a first drag area $[C_dA]^*(\theta)$ and a first projected area $A_p^*(\theta)$, both provided as functions of air-attack angle $\theta$. As used herein, the asterisk * on a variable/function is used to indicate that the variable/function is a first variable/function, i.e. before the change of the exterior shape of the vehicle combination. In the proposed method, it is assumed that knowledge about both the first drag area and first projected area are available. For example, such first functions may be obtained from factory (if starting the mission with a factory-default vehicle combination), or e.g. obtained from a database if wind tunnels experiments and/or numerical simulations for the starting vehicle combination have already been performed. The present invention is concerned with how to predict the drag area $[C_dA](\theta)$ of the vehicle combination after the change of the exterior shape of the vehicle combination. This will be referred to herein as the second drag area of the vehicle, and is also provided as a function of the air-attack angle $\theta$. To predict the second drag area, the envisaged method requires knowledge about the projected area of the vehicle after the change, as provided by the second projected area $A_p(\theta)$ as function of air-attack angle $\theta$.

The proposed method predicts the second drag area as

$$[C_dA](\theta) \approx [C_dA]^*(\theta)\frac{A_p(\theta)}{A_p^*(\theta)}, \qquad (2)$$

i.e. based on a rescaling of the first drag area by a ratio of the second projected area function to the first projected area function. As will be explained later herein, as the second projected area function $A_p(\theta)$ can be obtained based solely on geometrical considerations, the second drag area can thus be predicted without having to perform any wind tunnel tests/experiments and/or numerical simulations of the vehicle combination after the change in exterior shape.

With further reference also to Figures 1B and 1C, an example of how to obtain the drag area of a vehicle combination as a function of air-attack angel $\theta$ will now be explained in more detail. As shown in Figure 1A, the vehicle combination 100 has (in this particular example) a towing unit no (i.e. a tractor) and one towed unit 112 (in form of a trailer). According to the invention, the exterior shape of such a vehicle combination 100 may be approximated as a cuboid 140. The cuboid 140 has a first side 142 corresponding to a side 122 of the vehicle combination 100, and a second side 144 corresponding to a front 124 of the vehicle combination 100. The cuboid 140 thus has a length $l$, a width w, and a height $h$. The dimensions of the cuboid 140 are set such that the area of the side 142 of the cuboid 140 matches a side area $A_s$ of the vehicle combination 100, and such that an area of the side 144 of the cuboid 140 matches a front area $A_f$ of the vehicle combination 100. Phrased differently, the cuboid 140 is sized such that $A_s = l \times h$ and $A_f = w \times h$.

Figure 1B shows the situation in 1A from above. The projected area of the vehicle combination 100 is found by projecting the cuboid 140 on a plane 150 perpendicular to the air vector $v_a$ (i.e. to the air-attack). It is here assumed that the air vector has no vertical component, i.e. that the wind strikes the vehicle directly from the side and not e.g. from below or from above. The projection on the plane 150 is found by extending two lines 152a and 152b perpendicularly from the plane 150, and such that the two lines 152a and 152b touches a respective corner 142a and 142b of the cuboid 140. This results in a parallel projection of the cuboid 140 on the plane 150, and the resulting projected frontal area is provided by the distance $l' = l_1 + l_2$ times the height h of the cuboid. Using trigonometry, it is found that $l_1 = (A_f/h)cos(\theta)$ and $l_2 = (A_s/h)sin(\theta)$, and the projected area is thus provided as

$$A_p(\theta) = h \times l' = h \times (l_1 + l_2) = A_f\cos(\theta) + A_s\sin(\theta). \qquad (3)$$

If it is envisaged that a removal or addition of one or more vehicle units (such as trailers or other towed units) only affects the total side area $A_s$ of the vehicle combination 100, and leaves the front area $A_f$ unchanged, the second projected area function is thus found by modifying $A_s$. In some examples of the envisaged method, a change of the exterior shape of the vehicle combination 100 may include e.g. adding an additional trailer.

Figure 1C schematically illustrates a top-view of such an example, wherein the change of the exterior shape of the vehicle combination 100 includes adding the additional trailer 114 behind the (previous/first) trailer 112. If the additional trailer 114 is added such that the gap between the trailer 112 and the additional trailer is sufficiently small (i.e. such that trailer 112 is shadowing the additional trailer 114), the second projected area function may be found by changing the side area $A_s$ above according to $A_s = A_{s1}^* + A_{s2}$, where $A_{s1}^* = A_{s,tractor} + A_{s,trailer}$ is the old combined side area of the vehicle combination 100 including only the towing unit no (having side area $A_{s,tractor}$) and trailer 112 (having side area $A_{s,trailer}$), and where $A_{s2}$ is the side area of the additional trailer 114. This solution assumes that the height of the additional trailer 114 matches that of the trailer 112, and that the front area $A_f$ of the vehicle combination 100 remains at least approximately the same.

In the above situation, the second projected area (in the air-attack direction) may be defined as

$$A_p(\theta) = A_f \cos(\theta) + (A_{s1}^* + A_{s2})\sin(\theta)$$
$$= A_p^*(\theta) + A_{s2}\sin(\theta). \qquad (4)$$

Using equation (2), the second drag area function may thus be predicted as

$$[C_dA](\theta) \approx [C_dA]^*(\theta)\left[1 + \frac{A_{s2}\sin(\theta)}{A_p^*(\theta)}\right]. \qquad (5)$$

A similar reasoning may of course also be applied if the change of the exterior shape of the vehicle combination 100 instead results from e.g. removing a trailer, thereby reducing the total side area $A_s$ of the vehicle combination with an area $A_{reduce}$, in which case the above equation (5) would be changed such that the plus-sign becomes a minus-sign, and such that $A_{s2}$ is replaced with $A_{reduce}$. In general, equation (2) is applicable to all changes resulting in a change in the projected area of the vehicle in air-attack.

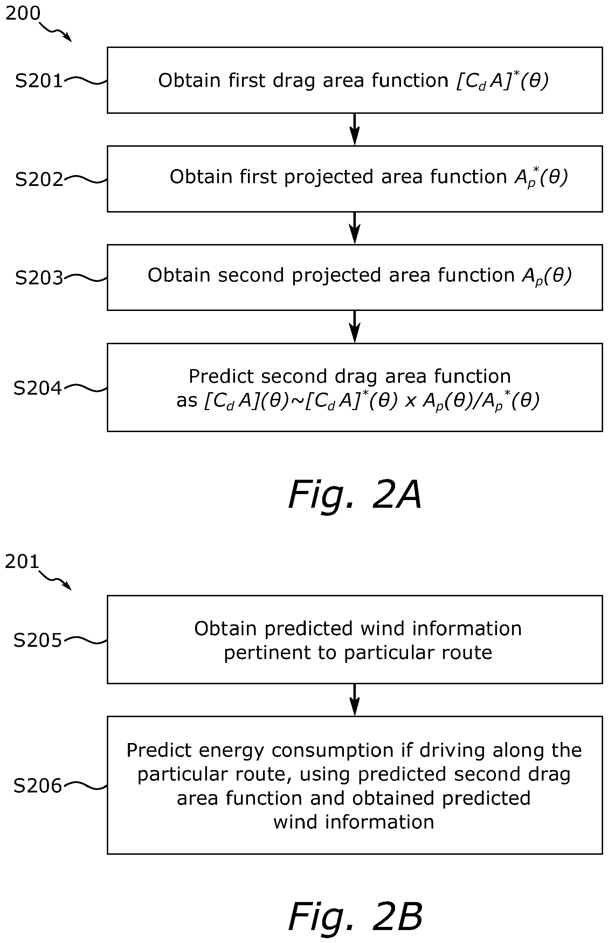

Figure 2 schematically illustrates the flow of an embodiment of a method 200 as envisaged herein. The method 200 is implemented on a computer and may including the various steps described above, in order to predict a (second) drag area of a vehicle combination if/after/when hypothetically changing an exterior shape of the vehicle combination from a first exterior shape to a second exterior shape.

In a step S201, the method 200 includes obtaining the first drag area function $[C_dA]^*(\theta)$ which indicates the dependence of the drag area of the vehicle combination having the first exterior shape on air-attack angle $\theta$. The first drag area function may for example be known from wind tunnel experiments/tests and/or from numerical simulations, or may be calculated using other methods such as for example on-line estimation. The first drag area function may for example be provided from the manufacturer of the vehicle combination having the first exterior shape.

In a step S202, the method 200 includes obtaining the first projected area function $A_p^*(\theta)$ which indicates the dependence of the projected area of the vehicle combination having the first exterior shape on air-attack angle $\theta$. The first projected area function may e.g. be obtained from CAD-software, by actual measurements of the vehicle combination having the first exterior shape, and/or e.g. by using the procedure described above with reference to Figure 1B.

In a step S203, the method 200 includes obtaining the second projected area function $A_p(\theta)$ which indicates the dependence of the projected area of the vehicle combination having the second exterior shape on air-attack angle. The second projected area function may e.g. be provided using the procedure described above with reference to Figure 1B, where the side area $A_s$ of the vehicle combination is updated by e.g. adding thereto a side area of an added trailer, or by e.g. subtracting therefrom a side area of a removed trailer, depending on what causes the change of the exterior shape of the vehicle combination to the second exterior shape.

Finally, in a step S204, the method 200 includes predicting the second drag area function $[C_dA](\theta)$ which indicates the dependence of the drag area of the vehicle combination having the second exterior shape on air-attack angle $\theta$. This is performed based on a rescaling of the first drag area function by the ratio of the second projected area function to the first projected area function, such as described above with reference to e.g. equation (2) or equation (5).

Figure 2B schematically illustrates a flow of another embodiment of an envisaged method 201, wherein the predicted second drag area found as a result of the method 200 described with reference to Figure 2A is used e.g. when planning a transport along a route which includes at least one changes to the exterior shape of the vehicle combination 100.

The method 201 is a continuation of the method 200, and assumes that the second drag area of the vehicle combination 100 has been predicted. In a step S205, the method 200 includes obtaining a predicted wind information pertinent to a particular route. The particular route may e.g. be a route along which the vehicle combination 100 is expected to travel. In particular, the particular route maybe a route along which the vehicle combination 100 is expected to travel after a change to the vehicle combination's exterior shape. For example, the particular route may be a route followed after having e.g. added an additional trailer, having e.g. dropped off one or more trailers, or e.g. after having performed any change of the exterior shape of the vehicle combination 100. Preferably, such a change includes (or is even restricted to) a scaling of the overall shape of the vehicle combination 100, such as obtained by addition/removal of one or more trailers, where the one or more trailers preferably has e.g. a height and width similar to the other trailers of the vehicle combination.

In a step S206, the method 201 continues by predicting an energy consumption of the vehicle combination 100 if driving along the particular route. This is obtained by using the predicted second drag area function and the obtained predicted wind information. To calculate the energy consumption, the air drag force $F_a$ is required, and is provided by equation (1) above. The drag area $[C_dA](\theta)$ is obtained from step S204 of method 200, and the assumed wind/air-attack angle $\theta$ and the wind/air speed at points along the route is obtained from the predicted wind information pertinent to the particular route. The expected energy consumption may thus be calculated, assuming a desired speed or speed profile of the vehicle combination 100 when driving along the route. For example, an instant power needed to propel the vehicle at a speed $v_1$ is found by multiplying the speed $v_1$ by the force $F_{lon}$ acting on the vehicle opposite the direction of travelling. This force includes the air drag force $F_a$, and preferably also other forces such as those caused by rolling resistance, road slope, etc. By defining a desired speed profile v(t), i.e. the desired speed at several time instances, the total energy required when driving along the route may be found by integrating the product of $F_{lon}$ and v(t) over time (where the force

$F_{lon}$ is of course not constant but also changes over time). Based on an expected efficiency of the propulsion system of the vehicle combination, an estimate of an energy consumption of the vehicle combination 100 may thus also be provided.

In other embodiments, the proposed methods 200 and 201 may be used also to for example control a speed of the vehicle combination when driving along the particular route, and be based on the predicted energy consumption. For example, instead of assuming a preset desired speed profile v(t), the method may instead try to find the optimal v(t) which minimizes both energy consumption as well as the time required to complete the particular route. For example, the method may decide that it is advantageous to drive slower in areas of higher air drag force, and to drive faster in areas of lower air drag force, in particular as the air drag force itself is proportional to relative air-attack speed squared, and as the required power is proportional to total force times speed.

Further embodiments of the envisaged method are also envisaged. For example, a simplified model of the drag area function may be defined as

$$[C_dA](\theta) \approx c_1 + c_2 \tan(\theta) + c_3 \tan^2(\theta), \qquad (6)$$

where $c_1$, $c_2$ and $c_3$ are model coefficients/parameters. For example, equation (5) may be used to predict $[C_dA](\theta)$ after a change in exterior shape of the vehicle combination. New values of $c_1$, $c_2$ and $c_3$ may then be found by model fitting, e.g. using a least-squares algorithm to find the values of $c_1$, $c_2$ and $c_3$ which minimize a square of differences between the predicted $[C_dA](\theta)$ from equation (5) and the model of equation (6).

More generalized, the drag area function $[C_dA](\theta)$ may depend mainly on two things, namely the area projection and the shape. The methods present so far mainly relies on the assumption that the overall shape and its related shape parameters are left unchanged after the exterior shape changes. Phrased differently, it is so far assumed that the change includes only a scaling of the overall shape, but not any more drastic changes such as changing from one form to another. For example, it is assumed that if the vehicle could be approximated as e.g. a cuboid before the change, the vehicle can still be approximated by a cuboid also after the change. In cases where the change of the exterior shape does not behave as an upscaling or downscaling of the vehicle combination, other models may need to be used.

To obtain such other models, in the model described by equation (6), it may be assumed that the speed of the air causing the air drag may be divided into two components, namely longitudinal/axial air speed $v_{ax}$ which is opposite the vehicle (combination) longitudinal direction 102, and lateral/radial air speed $v_{ay}$ which is perpendicular to the vehicle (combination) longitudinal direction 102. The drag area function $[C_dA](\theta)$ may then be divided into a shape factor $C_d(\theta)$ and area projection in air-attack angle $A_p(\theta)$, i.e. such that

$$[C_dA](\theta) = C_d(\theta)\, A_p(\theta). \qquad (7)$$

The shape factor may further be divided into an axial/longitudinal shape factor $C_{dx}(\theta)$ affecting the axial/longitudinal air flow, and a lateral/radial shape factor $C_{dy}(\theta)$ affecting the lateral/radial air flow. These factors may be approximated as

$$C_{dx}(\theta) \approx c_{x1} + c_{x2}\frac{v_{ay}}{v_{ax}} \qquad (8a)$$

and

$$C_{dy}(\theta) \approx c_{y1} + c_{y2}\frac{v_{ax}}{v_{ay}}, \qquad (8b)$$

where $c_{x1}$ defines the axial/longitudinal shape factor when there is no lateral/radial air flow, $c_{x2}$ defines the how the lateral/radial air flow affects the axial/longitudinal shape factor, $c_{y1}$ defines the lateral/radial shape factor when there is no axial/longitudinal air flow, and where $c_{y2}$ defines how the axial/longitudinal air flow affects the lateral/radial shape factor. The air drag force $F_a$ may then be written as a sum of an air drag $F_{ax}$ from the axial/longitudinal air flow and an air drag $F_{ay}$ from the lateral/radial air flow, i.e. as

$$F_a = F_{ax} + F_{ay}. \qquad (9)$$

The air drag from the axial/longitudinal air and air drag from the lateral/radial air may be written as

$$F_{ax} = 0.5\rho A_p(\theta)C_{dx}(\theta)v_{ax}^2 \qquad (10a)$$

and

$$F_{ay} = 0.5\rho A_p(\theta)C_{dy}(\theta)v_{ay}^2. \qquad (10b)$$

The parameters $c_1$, $c_2$ and $c_3$ may then be calculated as

$$c_1 = c_{x1}A_f, \qquad (11a)$$

$$c_2 = c_{x2}A_f + c_{y2}A_s, \qquad (11b)$$

and

$$c_3 = cy_1A_s. \qquad (11c)$$

Using this modified approach, when the exterior of the vehicle combination is changed in a way similar to scaling, the parameters $c_1$, $c_2$ and $c_3$ may be adjusted according to equations (na-c) with the parameters $c_{x1}$, $c_{x2}$, $c_{y1}$ and $c_{y2}$ unchanged and only adjusted according to changes in $A_f$ and $A_s$. On the other hand, if the exterior change is more related to the shape factors, like e.g. when changing an air deflector setting or adding a crosswind sensitivity reduction cover on the side of the vehicle combination, $A_f$ and $A_s$ may be left unchanged and $c_1$, $c_2$ and $c_3$ may be adjusted to the changes in $c_{x1}$, $c_{x2}$, $c_{y1}$ and $c_{y2}$. An exterior change may of course also be such that it causes both a change in scale and a change in scale factors, in which case the parameters $c_1$, $c_2$ and $c_3$ may be adjusted both by changing $A_f$ and $A_s$ and also $c_{x1}$, $c_{x2}$, $c_{y1}$ and $c_{y2}$.

In some embodiments, some of the parameters $c_{x1}$, $c_{x2}$, $c_{y1}$ and $c_{y2}$ may not be needed (and e.g. be assumed to be zero). It is envisaged to use any combination of parameters, although it is often likely that $c_{x1}$ is to be included for most applications, and that also at least one or more of the other tree parameters (or a function of them) $c_{x2}$, $c_{y1}$ and $c_{y2}$ are needed if crosswind sensitivity is to be taken into account.

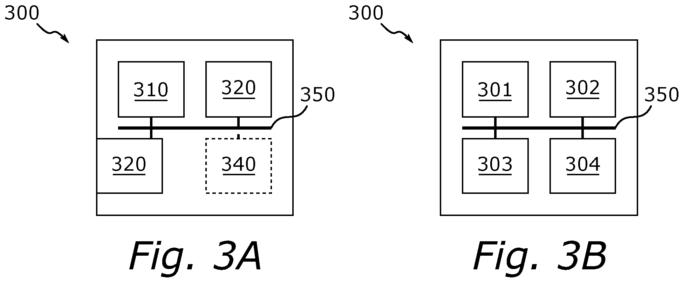

With reference to Figures 3A and 3B, various embodiments of a device as envisaged herein will now be described in more detail.

Figure 3A schematically illustrates, in terms of a number of functional units, the components of an embodiment of a device 300. The device 300 may e.g. be used in a vehicle combination, a transport planning system, a cruise controller, or similar. The device 300 includes processing circuitry 310. The processing circuitry 310 is provided using any combination of one or more of a suitable central processing unit (CPU), multiprocessor, microcontroller, digital signal processor (DSP), etc., capable of executing software instructions stored in a computer program product (not shown, but envisaged herein) stored on a storage medium 320. The processing circuitry 310 may further be provided as at least one application specific integrated circuit (ASIC), or field-programmable gate array (FPGA), or similar.

Particularly, the processing circuitry 310 is configured to cause the device 300 to perform a set of operations, or steps, such as one or more of steps S201-S204 as disclosed above e.g. when describing the method 200 illustrated in Figure 2A, and/or the steps S205 and S206 as disclosed above when describing the extend method 201 illustrated in Figure 2B. For example, the storage medium 320 may store a set of operations, and the processing circuitry 310 may be configured to retrieve the set of operations from the storage medium 320 to cause the device 300 to perform the set of operations. The set of operations may be provided as a set of executable instructions. Thus, the processing circuitry 310 is thereby arranged to execute methods as disclosed herein e.g. with reference to Figures 2A and 2B.

The storage medium 320 may also include persistent storage, which, for example, can be any single or combination of magnetic memory, optical memory, solid state memory or even remotely mounted memory. The storage medium 320 may thus provide non-transitory storage, storing computer-readable instructions for the processing circuitry 310.

The device 300 may further include a communications interface 330 for communications with other entities and objects, in order to e.g. receive/obtain one or more of the first drag area function, the first projected area function, and/or the predicted weather information. The interface 330 may also be used to receive other information about the vehicle combination 100. In other embodiments of the device 300, the first functions and/or the weather information may e.g. be stored within the device 300 itself, for example using the storage medium 320. The communication interface 330 may include one or more transmitters and receivers, including analogue and/or digital components, and may utilize e.g. one or more wired and/or wireless connections for this purpose.

The processing circuitry 310 controls the general operation of the device 300 e.g. by sending data and control signals to the communications interface 330 and the storage medium 320, by receiving data and reports from the communications interface 330, and by retrieving data and instructions from the storage medium 320. The device 300 may of course optionally also include other components, here illustrated by the dashed box 340. A communication bus 350 is also provided and connects the various modules/units 310, 320, 330, and 340 (if included), such that they may communicate with each other to exchange information.

Figure 3B schematically illustrates, in terms of a number of functional modules 301-304, the components of a device 300 according to one or more embodiments of the present invention. The device 300 includes at least a first obtain module 301 configured to perform step S201 of the method 200 described with reference to Figure 2A, a second obtain module 302 configured to perform step S202 of the method 200, a third obtain module 303 configured to perform step S203 of the method 200, and a predict module 304 configured to perform step S204 of the method 200. In some embodiments, the device 300 may also include a fourth obtain module (not shown) configured to perform step S205 of the method 201 described with reference to Figure 2B, and an additional predict module (not shown) configured to perform step S206 of the method 201. The modules 301-304 communicate via a communication bus 350.

In general terms, each functional module (such as modules 301-304) may be implemented in hardware or in software. Preferably, one or more or all functional modules may be implemented by the processing circuitry 310, possibly in cooperation with the communications interface 330 and/or the storage medium 320. The processing circuitry 310 may thus be arranged to from the storage medium 320 fetch instructions as provided by one or more of functional modules (e.g. 301-304), and to execute these instructions and thereby perform any steps of the method 200 (and/or the method 201), or any other method envisaged herein, performed by the device 300 as disclosed herein.

In some embodiments, the device 300 may further include additional functional modules (not shown), as needed to perform one or more methods as envisaged herein.

It is also envisaged to provide a vehicle or vehicle combination (such as e.g. the vehicle combination 100), where the vehicle or vehicle combination includes the device 300 as described with reference to Figures 3A and 3B.

It is also envisaged to provide a computer program for predicting a drag area of a vehicle combination if/after/when hypothetically changing an exterior shape of the vehicle combination from a first exterior shape to a second exterior shape. The computer program includes computer code that, when running on a processing circuitry of a device (such as e.g. the processing circuitry 310 of the device 300 described with reference to Figures 3A and 3B), causes the device to perform the various steps of any method (such as e.g. method 200 and/or 201) as described and envisaged herein.

It is also envisaged to provide a computer program product (not shown) in which the above envisaged computer program is stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

In the claims, the words "comprising" and "including" does not exclude other elements, and the indefinite article "a" or "an" does not exclude a plurality. The mere fact that certain features are recited in mutually different dependent claims does not indicate that a combination of these features cannot be used to advantage.

In summary of the present invention, it is provided an improved way of estimating/predicting, in advance, how the drag area of a vehicle combination changes when an outer shape of the vehicle combination changes. In particular, this requires only that the second projected area function of the vehicle combination (after the change) is known, and thereby allows to e.g. in advance predict an energy consumption of the vehicle combination. This allows for e.g. an improved planning of a transport along a route which includes one or more changes to the exterior shape of the vehicle combination (such as a pick-up/drop-off of one or more trailer units). This in contrast to commonly available technology, wherein the drag area of the changed vehicle combination must either be obtained by on-line estimation, wind tunnel tests/experiments, numerical simulations, and/or by tabular values. Where conventional technology thus makes it either hard or even impossible to plan for a particular route in advance, the way of predicting the change in drag area proposed herein does not suffer from such issues.

## Claims

1. A computer-implemented method (200) of predicting a drag area of a vehicle combination (100) after hypothetically changing an exterior shape of the vehicle combination from a first exterior shape to a second exterior shape, the method comprising:

- obtaining (S201) a first drag area function ($[C_dA]^*(\theta)$) indicating how a drag area of the vehicle combination having the first exterior shape depends on air-attack angle ($\theta$);
- obtaining (S202) a first projected area function ($A_p^*(\theta)$) indicating how a projected area of the vehicle combination having the first exterior shape on a plane (150) perpendicular to air-attack ($v_a$) depends on air-attack angle;
- obtaining (S203) a second projected area function ($A_p(\theta)$) indicating how a projected area of the vehicle combination having the second exterior shape on the plane perpendicular to air-attack depends on air-attack angle; and
- predicting (S204) a second drag area function ($[C_dA](\theta)$) indicating how a drag area of the vehicle combination having the second exterior shape depends on air-attack angle, based on a rescaling of the first drag area function by a ratio ($A_p(\theta)/A_p^*(\theta)$) of the second projected area function to the first projected area function.

2. The method according to claim 1, wherein obtaining the second projected area function includes estimating the second projected area as a projected area of a cuboid (140) on the plane perpendicular to air-attack.

3. The method according to claim 2, wherein changing the exterior shape of the vehicle combination includes adding or removing at least one trailer (114) to the vehicle combination, and wherein estimating the second projected area includes modifying a side area ($A_s$) of the cuboid by adding or removing thereto a side area ($A_{s2}$) of the at least one trailer.

4. The method according to any one of claims 1 to 3, wherein the method includes obtaining the first drag area function from at least one of wind tunnel experiments and numerical simulations.

5. The method according to any one of the preceding claims, wherein the method further includes assuming that changing to the second exterior shape from the first exterior shape corresponds to a scaling of the exterior shape of the vehicle combination.

6. The method according to any one of the preceding claims, wherein the method further includes obtaining (S205) predicted wind information pertinent to a particular route, and predicting (S206) an energy consumption of the vehicle combination if driving along the particular route using the predicted second drag area function and the obtained predicted wind information.

7. The method according to claim 6, wherein the method further includes controlling a speed of the vehicle combination based on the predicted energy consumption.

8. A device (300) for predicting a drag area of a vehicle combination after hypothetically changing an exterior shape of the vehicle combination from a first exterior shape to a second exterior shape, the device comprising processing circuitry (310) configured to cause the device to:

- obtain (S201) a first drag area function ($[C_dA]^*(\theta)$) indicating how a drag area of the vehicle combination having the first exterior shape depends on air-attack angle ($\Theta$);
- obtain (S202) a first projected area function ($A_p^*(\theta)$) indicating how a projected area of the vehicle combination having the first exterior shape on a plane (150) perpendicular to air-attack ($v_a$) depends on air-attack angle;
- obtain (S203) a second projected area function ($A_p(\theta)$) indicating how a projected area of the vehicle combination having the second exterior shape on the plane perpendicular to air-attack depends on air-attack angle, and
- predict (S204) a second drag area function ($[C_dA](\theta)$) indicating how a drag area of the vehicle combination having the second exterior shape depends on air-attack angle, based on a rescaling of the first drag area function by a ratio ($A_p(\theta)/A_p^*(\theta)$) of the second projected area function to the first projected area function.

9. The device according to claim 8, wherein the processing circuitry is further configured to cause the device to perform a method according to any one of claims 2 to 7.

10. A vehicle or vehicle combination, comprising a device according to claim 8 or 9.

11. The vehicle or vehicle combination according to claim 10, wherein the device forms part of a cruise control system configured to control a speed of the vehicle or vehicle combination.

12. A computer program for predicting a drag area of a vehicle combination (100) after hypothetically changing an exterior shape of the vehicle combination from a first exterior shape to a second exterior shape, the computer program comprising computer code that, when running on processing circuitry (310) of a device (300), causes the device to:

- obtain (S201) a first drag area function ($[C_dA]^*(\theta)$) indicating how a drag area of the vehicle combination having the first exterior shape depends on air-attack angle ($\Theta$);
- obtain (S202) a first projected area function ($A_p^*(\theta)$) indicating how a projected area of the vehicle combination having the first exterior shape on a plane (150) perpendicular to air-attack ($v_a$) depends on air-attack angle;
- estimate (S203) a second projected area function ($A_p(\theta)$) indicating how a projected area of the vehicle combination having the second exterior shape on the plane perpendicular to air-attack depends on air-attack angle, and
- predict (S204) a second drag area function ($[C_dA](\theta)$) indicating how a drag area of the vehicle combination having the second exterior shape depends on air-attack angle, based on a rescaling of the first drag area function by a ratio ($A_p(\theta)/A_p^*(\theta)$) of the second projected area function to the first projected area function.

13. The computer program according to claim 12, wherein the computer code is further such that it, when running on said processing circuitry of the device, causes the device to perform a method according to any one of claims 2 to 7.

14. A computer program product comprising a computer program according to claim 12 or 13, and a computer-readable storage medium on which the computer program is stored.


**Patentansprüche**

1. Computer-implementiertes Verfahren (200) zur Vorhersage einer Widerstandsfläche einer Fahrzeugkombination (100) nach hypothetischer Änderung einer Außenform der Fahrzeugkombination von einer ersten Außenform zu einer zweiten Außenform, das Verfahren umfassend:

- Erhalten (S201) einer ersten Widerstandsflächenfunktion (**$[C_dA]^*(\theta)$**), die angibt, wie eine Widerstandsfläche der Fahrzeugkombination mit der ersten Außenform vom Luftangriffswinkel (**$\theta$**) abhängt;
- Erhalten (S202) einer ersten projizierten Flächenfunktion $\left(A_p^*(\theta)\right)$, die angibt, wie eine projizierte Fläche der Fahrzeugkombination mit der ersten Außenform auf einer Ebene (150) senkrecht zum Luftangriffswinkel (**$v_a$**) vom Luftangriffswinkel abhängt;
- Erhalten (S203) einer zweiten projizierten Flächenfunktion (**$A_p(\theta)$**), die anzeigt, wie eine projizierte Fläche der Fahrzeugkombination mit der zweiten Außenform auf der Ebene senkrecht zum Luftangriff vom Luftangriffswinkel abhängt; und
- Vorhersagen (S204) einer zweiten Widerstandsflächenfunktion (**$[C_dA](\theta)$**), die anzeigt, wie eine Widerstandsfläche der Fahrzeugkombination mit der zweiten Außenform vom Luftangriffswinkel abhängt, basierend auf einer Neuskalierung der ersten Widerstandsflächenfunktion durch ein Verhältnis $\left(A_p(\theta)/A_p^*(\theta)\right)$ der zweiten projizierten Flächenfunktion zur ersten projizierten Flächenfunktion.

2. Verfahren nach Anspruch 1, wobei das Erhalten der zweiten projizierten Flächenfunktion das Schätzen der zweiten projizierten Fläche als eine projizierte Fläche eines Quaders (140) auf der Ebene senkrecht zum Luftangriff umfasst.

3. Verfahren nach Anspruch 2, wobei das Ändern der Außenform der Fahrzeugkombination das Hinzufügen oder Entfernen mindestens eines Anhängers (114) zu der Fahrzeugkombination umfasst, und wobei das Schätzen der zweiten projizierten Fläche das Modifizieren einer Seitenfläche ($A_s$) des Quaders durch Hinzufügen oder Entfernen einer Seitenfläche ($A_{s2}$) des mindestens einen Anhängers umfasst.

4. Verfahren nach einem der Ansprüche 1 bis 3, wobei das Verfahren das Erhalten der ersten Widerstandsflächenfunktion aus mindestens einem der Windkanalexperimente und/oder numerischen Simulationen umfasst.

5. Verfahren nach einem der vorhergehenden Ansprüche, wobei das Verfahren ferner die Annahme umfasst, dass das Ändern der ersten Außenform in die zweite Außenform einer Skalierung der Außenform der Fahrzeugkombination entspricht.

6. Verfahren nach einem der vorhergehenden Ansprüche, wobei das Verfahren ferner das Erhalten (S205) von vorhergesagten Windinformationen, die für eine bestimmte Route relevant sind, und das Vorhersagen (S206) eines Energieverbrauchs der Fahrzeugkombination beim Fahren entlang der bestimmten Route unter Verwendung der vorhergesagten zweiten Widerstandsflächenfunktion und der erhaltenen vorhergesagten Windinformationen umfasst.

7. Verfahren nach Anspruch 6, wobei das Verfahren ferner die Steuerung einer Geschwindigkeit der Fahrzeugkombination auf der Grundlage des vorhergesagten Energieverbrauchs umfasst.

8. Vorrichtung (300) zur Vorhersage einer Widerstandsfläche einer Fahrzeugkombination nach hypothetischer Änderung einer Außenform der Fahrzeugkombination von einer ersten Außenform zu einer zweiten Außenform, wobei die Vorrichtung eine Verarbeitungsschaltung (310) umfasst, die konfiguriert ist, dass sie die Vorrichtung veranlasst zu:

    - Erhalten (S201) einer ersten Widerstandsflächenfunktion ($[C_dA]^*(\theta)$), die angibt, wie eine Widerstandsfläche der Fahrzeugkombination mit der ersten Außenform vom Luftangriffswinkel ($\theta$) abhängt;

    - Erhalten (S202) einer ersten projizierten Flächenfunktion $\left(A_p^*(\theta)\right)$, die angibt, wie eine projizierte Fläche der Fahrzeugkombination mit der ersten Außenform auf einer Ebene (150) senkrecht zum Luftangriffswinkel ($v_a$) vom Luftangriffswinkel abhängt;

    - Erhalten (S203) einer zweiten projizierten Flächenfunktion ($A_p(\theta)$), die anzeigt, wie eine projizierte Fläche der Fahrzeugkombination mit der zweiten Außenform auf der Ebene senkrecht zum Luftangriff vom Luftangriffswinkel abhängt, und

    - Vorhersagen (S204) einer zweiten Widerstandsflächenfunktion ($[C_dA](\theta)$), die anzeigt, wie eine Widerstandsfläche der Fahrzeugkombination mit der zweiten Außenform vom Luftangriffswinkel abhängt, basierend auf einer Neuskalierung der ersten Widerstandsflächenfunktion durch ein Verhältnis $\left(A_p(\theta)/A_p^*(\theta)\right)$ der zweiten projizierten Flächenfunktion zur ersten projizierten Flächenfunktion.

9. Vorrichtung nach Anspruch 8, wobei die Verarbeitungsschaltung ferner konfiguriert ist, um die Vorrichtung zu veranlassen, ein Verfahren nach einem der Ansprüche 2 bis 7 durchzuführen.

10. Fahrzeug oder Fahrzeugkombination, umfassend eine Vorrichtung nach Anspruch 8 oder 9.

11. Fahrzeug oder Fahrzeugkombination nach Anspruch 10, wobei die Vorrichtung Teil eines Tempomatsystems ist, das zur Steuerung einer Geschwindigkeit des Fahrzeugs oder der Fahrzeugkombination konfiguriert ist.

12. Computerprogramm zur Vorhersage einer Widerstandsfläche einer Fahrzeugkombination (100) nach hypothetischer Änderung einer Außenform der Fahrzeugkombination von einer ersten Außenform zu einer zweiten Außenform, wobei das Computerprogramm einen Computercode umfasst, der, wenn er auf einer Verarbeitungsschaltung (310) einer Vorrichtung (300) ausgeführt wird, die Vorrichtung veranlasst zu:

    - Erhalten (S201) einer ersten Widerstandsflächenfunktion ($[C_dA]^*(\theta)$), die angibt, wie eine Widerstandsfläche der Fahrzeugkombination mit der ersten Außenform vom Luftangriffswinkel ($\theta$) abhängt;

    - Erhalten (S202) einer ersten projizierten Flächenfunktion $\left(A_p^*(\theta)\right)$, die angibt, wie eine projizierte Fläche der Fahrzeugkombination mit der ersten Außenform auf einer Ebene (150) senkrecht zum Luftangriffswinkel

**($v_a$)** vom Luftangriffswinkel abhängt;

- Erhalten (S203) einer zweiten projizierten Flächenfunktion **($A_p(\theta)$)** , die anzeigt, wie eine projizierte Fläche der Fahrzeugkombination mit der zweiten Außenform auf der Ebene senkrecht zum Luftangriff vom Luftangriffswinkel abhängt, und

- Vorhersagen (S204) einer zweiten Widerstandsflächenfunktion **($[C_dA](\theta)$),** die anzeigt, wie eine Widerstandsfläche der Fahrzeugkombination mit der zweiten Außenform vom Luftangriffswinkel abhängt, basierend auf einer Neuskalierung der ersten Widerstandsflächenfunktion durch ein Verhältnis $\left(A_p(\theta)/A_p^*(\theta)\right)$ der zweiten projizierten Flächenfunktion zur ersten projizierten Flächenfunktion.

13. Computerprogramm nach Anspruch 12, wobei der Computercode ferner so ist, dass er, wenn er in der Verarbeitungsschaltung der Vorrichtung läuft, die Vorrichtung veranlasst, ein Verfahren nach einem der Ansprüche 2 bis 7 durchzuführen.

14. Computerprogrammprodukt umfassend ein Computerprogramm nach Anspruch 12 oder 13 und ein computerlesbares Speichermedium, auf dem das Computerprogramm gespeichert ist.


## Revendications

1. Procédé mis en œuvre par ordinateur (200) pour la prédiction d'une zone de traînée d'une combinaison de véhicules (100) après avoir hypothétiquement transformé une forme extérieure de la combinaison de véhicules d'une première forme extérieure en une seconde forme extérieure, ce procédé comprenant :

- l'obtention (S201) d'une première fonction de zone de traînée **($[C_dA]^*(\theta)$)** indiquant comment une zone de traînée de la combinaison de véhicules ayant la première forme extérieure dépend de l'angle d'attaque de l'air **($\theta$)** ;

- l'obtention (S202) d'une première fonction de zone projetée $\left(A_p^*(\theta)\right)$ indiquant comment une zone projetée de la combinaison de véhicules ayant la première forme extérieure sur un plan (150) perpendiculaire à l'attaque de l'air ($v_a$) dépend de l'angle d'attaque de l'air ;

- l'obtention (S203) d'une seconde fonction de zone projetée ($A_p(\theta)$) indiquant comment une zone de traînée de la combinaison de véhicules ayant la seconde forme extérieure sur le plan perpendiculaire à l'attaque de l'air dépend de l'angle d'attaque de l'air ; et

- la prédiction (S204) d'une seconde fonction de zone de traînée **($[C_dA](\theta)$)** indiquant comment une zone de traînée de la combinaison de véhicules ayant la seconde forme extérieure dépend de l'angle d'attaque de l'air, en se basant sur une remise à l'échelle de la première fonction de zone de traînée par un rapport $\left(A_p(\theta)/A_p^*(\theta)\right)$ entre la seconde fonction de zone projetée et la première fonction de zone projetée.

2. Procédé selon la revendication 1, dans lequel l'obtention de la seconde fonction de zone projetée inclut l'estimation de la seconde zone projetée en tant que zone projetée d'un cuboïde (140) sur le plan perpendiculaire à l'attaque de l'air.

3. Procédé selon la revendication 2, dans lequel le changement de forme extérieure de la combinaison de véhicules inclut la journée ou le retrait d'au moins une remorque (114) à la combinaison de véhicules, et l'estimation de la seconde zone projetée inclut la modification d'une zone latérale **($A_s$)** du cuboïde en y ajoutant ou en en retirant une zone latérale **($A_{s2}$)** de l'au moins une remorque.

4. Procédé selon l'une quelconque des revendications 1 à 3, le procédé incluant l'obtention de la première fonction de zone de traînée à partir d'au moins soit des expérimentations en tunnel de vent, soit des simulations numériques.

5. Procédé selon l'une quelconque des revendications précédentes, le procédé incluant en outre l'hypothèse que le passage de la seconde forme extérieure en partant de la première forme extérieure correspond à une mise à l'échelle de la forme extérieure de la combinaison de véhicules.

6. Procédé selon l'une quelconque des revendications précédentes, le procédé incluant en outre l'obtention (S205) d'informations concernant le vent relatives à un itinéraire particulier, et la prédiction (S206) d'une consommation d'énergie de la combinaison de véhicules en cas de conduite le long de l'itinéraire particulier en utilisant la seconde fonction de zone de traînée prédite et les informations concernant le vent prédites obtenues.

**7.** Procédé selon la revendication 6, le procédé incluant en outre le contrôle d'une vitesse de la combinaison de véhicules en se basant sur la consommation d'énergie prédite.

**8.** Dispositif (300) de prédiction d'une zone de traînée d'une combinaison de véhicules après avoir hypothétiquement transformé une forme extérieure de la combinaison de véhicules d'une première forme extérieure en une seconde forme extérieure, ce dispositif comprenant des circuits de traitement (310) configurés pour amener le dispositif à :

- obtenir (S201) une première fonction de zone de traînée **([$C_d$$A$]\*($\theta$))** indiquant comment une zone de traînée de la combinaison de véhicules ayant la première forme extérieure dépend de l'angle d'attaque de l'air **($\theta$)** ;
- obtenir (S202) une première fonction de zone projetée $\left(A_p^*(\theta)\right)$ indiquant comment une zone projetée de la combinaison de véhicules ayant la première forme extérieure sur un plan (150) perpendiculaire à l'attaque de l'air **($v_a$)** dépend de l'angle d'attaque de l'air ;
- obtenir (S203) une seconde fonction de zone projetée **($A_p$($\theta$))** indiquant comment une zone projetée de la combinaison de véhicules ayant la seconde forme extérieure sur le plan perpendiculaire à l'attaque de l'air dépend de l'angle d'attaque de l'air, et
- prédire (S204) une seconde fonction de zone de traînée **([$C_d$$A$]($\theta$))** indiquant comment une zone de traînée de la combinaison de véhicules ayant la seconde forme extérieure dépend de l'angle d'attaque de l'air, en se basant sur une remise à l'échelle de la première fonction de zone de traînée par un rapport $\left(A_p(\theta)/A_p^*(\theta)\right)$ entre la seconde fonction de zone projetée et la première fonction de zone projetée.

**9.** Procédé selon la revendication 8, dans lequel les circuits de traitement sont en outre configurés pour amener le dispositif à réaliser un procédé selon les quelconques des revendications 2 à 7.

**10.** Véhicule ou combinaison de véhicules comprenant un dispositif selon la revendication 8 ou 9.

**11.** Véhicule ou combinaison de véhicules selon la revendication 10, dans lequel le dispositif fait partie d'un système de régulation de vitesse configuré pour contrôler une vitesse du véhicule ou de la combinaison de véhicules.

**12.** Programme informatique pour la prédiction d'une zone de traînée d'une combinaison de véhicules (100) après avoir hypothétiquement transformé une forme extérieure de la combinaison de véhicules d'une première forme extérieure en une seconde forme extérieure, ce programme informatique comprenant un code de programme qui, une fois exécuté sur des circuits de traitement (310) d'un dispositif (300), amène le dispositif à :

- obtenir (S201) une première fonction de zone de traînée **([$C_d$$A$]\*($\theta$))** indiquant comment une zone de traînée de la combinaison de véhicules ayant la première forme extérieure dépend de l'angle d'attaque de l'air **($\theta$)** ;
- obtenir (S202) une première fonction de zone projetée $\left(A_p^*(\theta)\right)$ indiquant comment une zone projetée de la combinaison de véhicules ayant la première forme extérieure sur un plan (150) perpendiculaire à l'attaque de l'air ($v_a$) dépend de l'angle d'attaque de l'air ;
- estimer (S203) une seconde fonction de zone projetée **($A_p$($\theta$))** indiquant comment une zone projetée de la combinaison de véhicules ayant la seconde forme extérieure sur le plan perpendiculaire à l'attaque de l'air dépend de l'angle d'attaque de l'air, et
- prédire (S204) une seconde fonction de zone de traînée **([$C_d$$A$]($\theta$))** indiquant comment une zone de traînée de la combinaison de véhicules ayant la seconde forme extérieure dépend de l'angle d'attaque de l'air, en se basant sur une remise à l'échelle de la première fonction de zone de traînée par un rapport $\left(A_p(\theta)/A_p^*(\theta)\right)$ entre la seconde fonction de zone projetée et la première fonction de zone projetée.

**13.** Programme informatique selon la revendication 12, dans lequel le code informatique est en outre tel que, une fois qu'il est exécuté sur lesdits circuits de traitement, il amène le dispositif à réaliser un procédé selon l'une quelconque des revendications 2 à 7.

14. Produit de programmation informatique comprenant un programme informatique selon la revendication 12 ou 13, et un support d'enregistrement lisible par ordinateur sur lequel le programme informatique est sauvegardé.

Fig. 1A

Fig. 1B

Fig. 1C

200

S201 — Obtain first drag area function $[C_d A]^*(\theta)$

S202 — Obtain first projected area function $A_p^*(\theta)$

S203 — Obtain second projected area function $A_p(\theta)$

S204 — Predict second drag area function
as $[C_d A](\theta) \sim [C_d A]^*(\theta) \times A_p(\theta)/A_p^*(\theta)$

## Fig. 2A

201

S205 — Obtain predicted wind information
pertinent to particular route

S206 — Predict energy consumption if driving along the
particular route, using predicted second drag
area function and obtained predicted
wind information

## Fig. 2B

300

| 310 | 320 | 350 |
| 320 | 340 | |

## *Fig. 3A*

300

| 301 | 302 | 350 |
| 303 | 304 | |

## *Fig. 3B*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003031253 A1